# EUROPÄISCHE PATENTSCHRIFT

(11) **EP 4 296 034 B1**
(45) Veröffentlichungstag und Bekanntmachung des Hinweises auf die Patenterteilung: **01.04.2026**
(21) Anmeldenummer: 23164998.9
(22) Anmeldetag: 29.03.2023
(51) Int. Cl.: B29C 49/00, B29C 49/42, B67C 7/00, B67C 3/22, B29C 49/28, B29C 49/36, B29C 49/46

(54) **ANLAGE UND VERFAHREN ZUM BETREIBEN EINER ANLAGE ZUM HERSTELLEN VON BEFÜLLTEN KUNSTSTOFFBEHÄLTNISSEN AUS STERILEN KUNSTSTOFFVORFORMLINGEN**
SYSTEM AND METHOD FOR OPERATING A SYSTEM FOR PRODUCING FILLED PLASTIC CONTAINERS FROM STERILE PLASTIC PREFORMS
INSTALLATION ET PROCÉDÉ DE FONCTIONNEMENT D'UNE INSTALLATION DE FABRICATION DE RÉCIPIENTS EN PLASTIQUE REMPLIS À PARTIR DE PRÉFORMES EN PLASTIQUE STÉRILES

(30) Priorität: 15.07.2022 DE 102022117725
(43) Veröffentlichungstag der Anmeldung: 27.12.2023
(73) Patentinhaber: Krones AG, 93073 Neutraubling (DE)
(72) Erfinder: Wittmann, Christian, 93073 Neutraubling (DE); Peter, Michael, 93073 Neutraubling (DE)
(74) Vertreter: Hannke Bittner & Partner mbB Regensburg

(56) Entgegenhaltungen:
- US-A1- 2011 286 899
- US-A1- 2013 061 557
- US-A1- 2014 157 726
- US-A1- 2016 257 055

## Beschreibung

Die vorliegende Erfindung bezieht sich auf eine Anlage und ein Verfahren zum Betreiben einer Anlage zum Herstellen von befüllten Kunststoffbehältnissen, insbesondere befüllten Getränkebehältnissen, aus sterilen Kunststoffvorformlingen. Derartige Anlagen und Verfahren zum Betreiben einer solchen sind aus dem Stand der Technik seit langem bekannt.

Üblicherweise weisen derartige Anlagen eine Umformvorrichtung zum Umformen der sterilisierten Kunststoffvorformlinge zu Kunststoffbehältnissen auf, welche einen um eine Mittelachse bewegbaren und insbesondere drehbaren Transportträger aufweist. An dem Transportträger ist üblicherweise eine Vielzahl von Umformungsstationen zur Umformung jeweils eines Kunststoffvorformlings durch Beaufschlagung mit einem fließfähigen Medium zu einem Kunststoffbehältnis angeordnet.

Füllgut, insbesondere Getränke, kann dabei erst in ein auf diese Weise hergestelltes Behältnis eingefüllt werden, sobald das Behältnis in sterilem Zustand, insbesondere dessen Innenbereich, vorliegt. Zur Sterilisation der Behältnisse, insbesondere deren Innenbereich (bzw. Innenwandung, ist daher üblicherweise eine Sterilisationsvorrichtung vorgesehen. Der Füllvorgang wird üblicherweise mit einer Füllvorrichtung zum Befüllen der Kunststoffbehältnisse während deren wenigstens abschnittsweisen, im Wesentlichen entlang einer Kreislinie erfolgenden Transport um eine Mittelachse der Füllvorrichtung vorgenommen.

Aus dem Stand der Technik sind Anlagen und Verfahren zum Betreiben einer solchen bekannt, bei denen nicht die bereits fertig umgeformten Behältnisse vor dem Füllvorgang sterilisiert werden, sondern die noch nicht-umgeformten Kunststoffvorformlinge. Der Vorteil dieser Vorgehensweise liegt darin, dass die Kunststoffvorformlinge eine deutlich kleinere Oberfläche besitzen als die (fertig umgeformten) Kunststoffbehältnisse. Hierdurch wird ein spürbar geringerer Energie- und Medienverbrauch ermöglicht. Außerdem weist der Preform bzw. der Kunststoffvorformling noch keine Hinterschnitte wie die fertig geblasen Flasche auf. Sterilisationsmedium kann somit leichter an alle Stellen gelangen.

Aus den Anlagen und den Verfahren zum Betreiben der Anlagen, die derzeit aus dem Stand der Technik bekannt sind, ergibt sich der Nachteil, dass die Anlagen einen großen Bauraum beanspruchen. Beispielsweise ist aus dem internen Stand der Technik der Anlage eine Anlage bekannt, bei welcher die Mittelachse der Umformvorrichtung einen Abstand zu einer Mittelachse der Füllvorrichtung für Anlagen mit einer Umformvorrichtung mit 24 Umformstationen von mehr als 9 m hat.

US 2016/257055 A1, US 2013/061557 A1 und US 2011/286899 A1 offenbaren Anlagen zum Herstellen von befüllten Kunststoffbehältnissen aus, insbesondere mittels einer Sterilisationsvorrichtung zur Sterilisation wenigstens einer Innenwandung und/oder Außenwandung der Kunststoffvorformlinge, sterilisierten Kunststoffvorformlingen, mit einer Transporteinrichtung zum Transportieren der Kunststoffvorformlinge sowie aus den Kunststoffvorformlingen durch Umformung entstandener Kunststoffbehältnisse entlang eines vorgegebenen Transportpfads durch die Anlage, mit einer Umformvorrichtung zum Umformen der sterilisierten Kunststoffvorformlinge zu Kunststoffbehältnissen, wobei die Transporteinrichtung dazu geeignet und bestimmt ist, die sterilisierten Kunststoffvorformlinge der Umformvorrichtung zuzuführen, wobei die Umformvorrichtung einen um eine Mittelachse (AB) bewegbaren drehbaren Transportträger aufweist, an dem eine Vielzahl von Umformungsstationen zur Umformung jeweils eines Kunststoffvorformlings durch Beaufschlagung mit einem fließfähigen Medium zu einem Kunststoffbehältnis angeordnet ist, mit einer Füllvorrichtung zum Befüllen der Kunststoffbehältnisse während deren wenigstens abschnittsweisen, im Wesentlichen entlang einer Kreislinie erfolgenden Transport um eine Mittelachse (AF) der Füllvorrichtung, wobei die Umformvorrichtung und die Füllvorrichtung einen maximalen Abstand (d) zueinander in Bezug auf deren jeweilige Mittelachsen (AB, AF) aufweist.

US 2014/157726 A1 offenbart eine Anlage zum Herstellen von befüllten Kunststoffbehältnissen aus, insbesondere mittels einer Sterilisationsvorrichtung zur Sterilisation wenigstens einer Innenwandung und/oder Außenwandung der Kunststoffvorformlinge, sterilisierten Kunststoffvorformlingen, mit einer Transporteinrichtung zum Transportieren der Kunststoffvorformlinge sowie aus den Kunststoffvorformlingen durch Umformung entstandener Kunststoffbehältnisse entlang eines vorgegebenen Transportpfads durch die Anlage, mit einer Umformvorrichtung zum Umformen der sterilisierten Kunststoffvorformlinge zu Kunststoffbehältnissen, wobei die Transporteinrichtung dazu geeignet und bestimmt ist, die sterilisierten Kunststoffvorformlinge der Umformvorrichtung zuzuführen, wobei die Umformvorrichtung einen um eine Mittelachse (AB) bewegbaren drehbaren Transportträger aufweist, an dem eine Vielzahl von Umformungsstationen zur Umformung jeweils eines Kunststoffvorformlings durch Beaufschlagung mit einem fließfähigen Medium zu einem Kunststoffbehältnis angeordnet ist, mit einer Füllvorrichtung zum Befüllen der Kunststoffbehältnisse während deren wenigstens abschnittsweisen, im Wesentlichen entlang einer Kreislinie erfolgenden Transport um eine Mittelachse (AF) der Füllvorrichtung, wobei die Umformvorrichtung und die Füllvorrichtung einen maximalen Abstand (d) zueinander in Bezug auf deren jeweilige Mittelachsen (AB, AF) von null aufweist.

Der vorliegenden Erfindung liegt die Aufgabe zugrunde, die aus dem Stand der Technik bekannten Nachteile zu überwinden und eine Anlage sowie ein Verfahren zum Betreiben einer Anlage bereitzustellen, welche weniger Bauraum in Anspruch nimmt bzw. welche einen vergleichsweise kleineren "Footprint" aufweist. Hierdurch kann vorteilhaft eine Kosten- und Platzeinsparung erreicht werden.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Anlage zum Herstellen von befüllten Kunststoffbehältnissen aus, insbesondere mittels einer Sterilisationsvorrichtung zur Sterilisation wenigstens einer Innenwandung und/oder Außenwandung der Kunststoffvorformlinge, sterilisierten Kunststoffvorformlingen weist eine Transporteinrichtung zum Transportieren der Kunststoffvorformlinge sowie aus den Kunststoffvorformlingen durch Umformung entstandener Kunststoffbehältnisse entlang eines (fest) vorgegebenen Transportpfads durch die Anlage auf.

Bei den Behältnissen handelt es sich bevorzugt um Getränkebehältnisse und/oder um Kunststoff- bzw. Polyethylenterephthalat (PET)-Behältnisse. Bevorzugt handelt es sich bei den Behältnissen um Flaschen.

Bevorzugt ist die Transporteinrichtung zum wenigstens abschnittsweisen Transport der Kunststoffvorformlinge und/oder Kunststoffbehältnisse bei deren Bewegung durch die Anlage geeignet und bestimmt. Bevorzugt ist die Transporteinrichtung zum (insbesondere unterbrechungsfreien) vollständigen Transportieren der Kunststoffvorformlinge und hieraus entstandener Kunststoffbehältnisse in der gesamten Anlage geeignet und bestimmt. Dabei weist die Transporteinrichtung insbesondere mehrere, voneinander verschiedene Transporteinheiten wie wenigstens einen und bevorzugt eine Vielzahl von Transportstern(en) und/oder Zuführstern(e) und/oder Teilungsverzugsstern(e) auf. Mit anderen Worten ist die Transporteinrichtung bevorzugt mehrteilig (aus einer Vielzahl von Transporteinheiten) ausgestaltet, wobei die Kunststoffvorformlinge bzw. die Kunststoffbehältnisse von einer Transporteinheit zur nächsten übergeben werden.

Die Anlage weist (wenigstens und bevorzugt genau) eine Umformvorrichtung zum Umformen der sterilisierten Kunststoffvorformlinge zu (fertig-umgeformten) Kunststoffbehältnissen auf. Der Begriff "Kunststoffbehältnis" (oder auch "Behältnis") wird nachfolgend insbesondere in Bezug auf aus den Kunststoffvorformlingen (mittels der Umformvorrichtung) fertig umgeformte Kunststoffbehältnisse verwendet.

Die Transporteinrichtung ist dazu geeignet und bestimmt, die sterilisierten Kunststoffvorformlinge der Umformvorrichtung zuzuführen, beispielsweise über einen Einlaufstern.

Die Umformvorrichtung weist einen, um eine Mittelachse bewegbaren und insbesondere (um die Mittelachse) drehbaren Transportträger auf, an dem eine Vielzahl von Umformungsstationen zur Umformung jeweils eines Kunststoffvorformlings durch Beaufschlagung mit einem fließfähigen Medium zu einem Kunststoffbehältnis angeordnet ist. Bevorzugt werden die Kunststoffvorformlinge während deren Umformung (also während sie vereinzelt in jeweils einer der Vielzahl von Umformungsstationen angeordnet sind) wenigstens abschnittsweise um die Mittelachse der Umformvorrichtung im Wesentlichen (wenigstens abschnittsweise) entlang einer Kreislinie transportiert.

Die Kunststoffvorformlinge werden bevorzugt vereinzelt (sukzessive) der Umformvorrichtung zugeführt. Jede Umformungsstation kann dabei genau einen umzuformenden Kunststoffvorformling aufnehmen.

Bei dem (gemeinsamen) (Transport-)Träger, an welchem die Vielzahl von Umformungsstationen angeordnet ist, handelt es sich insbesondere um einen drehbaren Träger und insbesondere um ein Blasrad. Die Umformungsstationen, insbesondere die Blasstationen, weisen jeweils eine Blasformeinrichtung auf, welche bevorzugt einen Hohlraum ausbilden, innerhalb dessen die Kunststoffvorformlinge zu den Kunststoffbehältnissen expandierbar sind.

Die Blasformeinrichtungen sind dabei bevorzugt mehrteilig ausgebildet und weisen bevorzugt zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Bei der Umformvorrichtung zum Umformen von Kunststoffvorformlingen zu Kunststoffbehältnissen handelt es sich bevorzugt um eine Blasmaschine (und/oder eine Form-Füll-maschine). Dies bedeutet, dass die Kunststoffvorformlinge zunächst in einer Heizstrecke mittels einer Heizvorrichtung thermisch konditioniert und anschließend durch Beaufschlagung mit einem flüssigen oder gasförmigen Medium (bevorzugt Druckluft) in einer Umformungsstation, insbesondere einer Blasstation, expandiert werden. Das fließfähige Medium steht bevorzugt unter Druck. Für die Zuführung des unter Druck stehenden Mediums weist die Vorrichtung bevorzugt eine Blasdüse auf, welche an eine Mündung und/oder im Inneren einer Mündung und/oder einem Tragring der Kunststoffvorformlinge und/oder an einer Blasform(-einrichtung) dichtend anlegbar ist, um die Kunststoffvorformlinge so mit flüssigem oder gasförmigem Medium zu expandieren. Mit anderen Worten kann die Blasdüse an der Mündung, aber auch am Tragring oder an der Blasform, oder auch im Inneren der Mündung abdichten. Daneben ist bevorzugt auch eine Ventilanordnung vorgesehen, welche die Zuführung der Blasluft an die Kunststoffvorformlinge steuert.

Bevorzugt werden die Kunststoffvorformlinge für deren Umformvorgang mit unterschiedlichen Druckniveaus, bevorzugt entsprechend einer vorgegebenen und bevorzugt variablen

Druckkurve, beaufschlagt. So ist es beispielsweise bekannt, dass die Kunststoffvorformlinge zunächst mit einem Vorblasdruck beaufschlagt werden, anschließend mit mindestens einem Zwischenblasdruck und schließlich auch noch mit einem Fertigblasdruck.

Die Anlage weist eine Füllvorrichtung zum Befüllen der Kunststoffbehältnisse während deren wenigstens abschnittsweisen, im Wesentlichen entlang einer Kreislinie erfolgenden Transport um eine Mittelachse der Füllvorrichtung. Mit anderen Worten werden die Behältnisse innerhalb bzw. in dem Bereich der Füllvorrichtung wenigstens abschnittsweise entlang einer Kreislinie transportiert, wobei der Mittelpunkt dieser Kreislinie eine Mittelachse der Füllvorrichtung darstellt, welche sich insbesondere in einem zentralen Bereich der Füllvorrichtung befindet. Bevorzugt weist die Füllvorrichtung einen (um die Mittelachse) bewegbaren und bevorzugt drehbaren Träger auf, welcher die Kunststoffbehältnisse - insbesondere vereinzelt - bevorzugt wenigstens abschnittsweise entlang der Kreislinie transportiert. Der Abschnitt der Kreislinie, entlang dem die Kunststoffbehältnisse bewegt werden erstreckt sich dabei bevorzugt über einen Mittelpunktswinkel von mehr als 180°, bevorzugt mehr als 200°, besonders bevorzugt mehr als 270°.

Bevorzugt weist die Füllvorrichtung eine Vielzahl von Füllorgane auf, wobei ein Füllorgan mit einem (wenigstens abschnittsweise entlang der Kreislinie transportierten) zu befüllenden Kunststoffbehältnis in der Füllvorrichtung in Fluidverbindung bringbar ist und das Kunststoffbehältnis durch dieses Füllorgan befüllbar ist bzw. das Füllorgan sowie die Füllvorrichtung dazu geeignet und bestimmt ist, das in der Füllvorrichtung befindliche, zu befüllende Kunststoffbehältnis (mit einem vorgegebenen Füllgut, wie einem Getränk) zu befüllen.

Erfindungsgemäß weisen die Umformvorrichtung und die Füllvorrichtung einen maximalen Abstand zueinander in Bezug auf deren jeweilige Mittelachsen
- von 5,5 m, bevorzugt von 5,3 m auf und die Umformvorrichtung weist eine maximale Anzahl von 24 Umformungsstationen auf
   oder
- von 6,0 m, bevorzugt von 5,6 m auf und die Umformvorrichtung weist mehr als 24 Umformungsstationen auf.

Bevorzugt oder alternativ weist die Umformvorrichtung und die Füllvorrichtung einen maximalen Abstand zueinander in Bezug auf deren jeweilige Mittelachsen
- von 5,5 m, bevorzugt von 5,3 m, im Falle einer Umformvorrichtung mit einer maximalen Anzahl von 24 Umformungsstationen
   und/oder
- von 6,0 m, bevorzugt von 5,6 m, im Falle einer Umformvorrichtung mit mehr als 24 Umformungsstationen,
auf.

Hierdurch ergibt sich vorteilhaft ein sehr kleiner "Footprint" der Anlage.

Mit anderen Worten ist im Falle einer Anlage mit einer Umformvorrichtung, welche eine maximale Anzahl von 24 Umformungsstationen aufweist, die Umformvorrichtung von der Füllvorrichtung maximal 5,5 m, bevorzugt maximal 5,3 m entfernt, gesehen auf die Mittelachse der Umformvorrichtung und die Mittelachse der Füllvorrichtung.

Beispielsweise könnte der Abstand zwischen der Umformvorrichtung und der Füllvorrichtung im Falle einer Anlage mit bis zu 16 Umformungsstationen in einem Bereich zwischen 3 m und 5 m, bevorzugt zwischen 4,5 m und 1,8 m liegen.

Im Falle einer Anlage mit einer Umformvorrichtung, welche mehr als 24 Umformungsstationen (bevorzugt zwischen 25 und 30 Umformungsstationen und besonders bevorzugt zwischen 26 und 30 Umformungsstationen) aufweist, ist die Umformvorrichtung von der Füllvorrichtung maximal 6,0 m, bevorzugt maximal 5,6 m entfernt, gesehen auf die Mittelachse der Umformvorrichtung und die Mittelachse der Füllvorrichtung.

Beispielsweise könnte der Abstand zwischen der Umformvorrichtung und der Füllvorrichtung im Falle einer Anlage mit mehr als 24 Umformungsstationen in einem Bereich zwischen 4,5 m und 6 m, bevorzugt zwischen 5 m und 5,8 und besonders bevorzugt in einem Bereich zwischen 5,2 m und 5,6 m liegen.

In einer vorteilhaften Ausführungsform weist die Anlage eine Sterilisationsvorrichtung zum Sterilisieren wenigstens einer Innenwandung (bevorzugt eine im Wesentlichen und besonders bevorzugt eine vollständige Gesamt-Innenoberfläche) und/oder einer Außenwandung eines umzuformenden Kunststoffvorformlings auf. Dabei ist die Sterilisationsvorrichtung dazu geeignet und bestimmt, Mikroorganismen und/oder Sporen auf der Innenwandung des umzuformenden Kunststoffvorformlings zu inaktivieren. Dies bietet den eingangs erwähnten Vorteil, dass eine im Vergleich zu dem fertig-umgeformten Kunststoffbehältnis kleinere (Innen-)Fläche der Kunststoffvorformlinge sterilisiert werden muss und hierdurch Energie- und Medien-Ressourcen eingespart werden können.

Denkbar ist auch, dass die Sterilisationsvorrichtung (oder eine weitere Sterilisationsvorrichtung) (insbesondere als Teil der Anlage) vorgesehen ist, welche dazu geeignet und bestimmt ist, (zusätzliche zur Innenwandung) wenigstens bereichsweise eine Außenwandung bzw. eine Außenoberfläche des Kunststoffvorformlings zu sterilisieren, insbesondere Mikroorganismen und/oder Sporen wenigstens bereichsweise auf der Außenwandung (bevorzugt die gesamte Außenoberfläche) und bevorzugt der gesamten Oberfläche (also Innen- und Au-ßenoberfläche) des umzuformenden Kunststoffvorformlings zu inaktivieren. Denkbar ist etwa, dass (lediglich) ein Mündungsbereich und/oder ein Gewindebereich und/oder ein Haltering sterilisiert wird, so dass eine Rekontamination des sterilisierten Innenwandungsbereichs durch einen nicht-sterilisierten Außenwandungsbereich verhindert werden kann.

Zur Sterilisierung kann die Sterilisationsvorrichtung dazu geeignet und bestimmt sein, flüssiges Wasserstoffperoxid und/oder ein Gemisch aus heißer Luft und gas- oder dampfförmigen Wasserstoffperoxid (in der Gasphase und/oder in der flüssigen Phase) und/oder (mit Hilfe von bevorzugt Sprühdüsen und/oder Ultraschallvernebelung) gesprühtes konzentriertes Wasserstoffperoxid zu verwenden.

Denkbar ist beispielsweise, dass Sporen mit einer 35 %iger Wasserstoffperoxidlösung und Wasser- und Wasserstoffperoxiddampf gesättigter Luft (Wasserstoffperoxiddampf gesättigte Luft mit Konzentration H₂O₂ in g/100g trockener Luft wenigstens 0,0228, bevorzugt wenigstens 0,0478, bevorzugt wenigstens 0,1002, bevorzugt wenigstens 0,1710, bevorzugt wenigstens 0,3656, bevorzugt wenigstens 0,7397), Behandlungstemperatur von wenigstens 60°C, inaktiviert werden.

Bevorzugt ist die Sterilisationsvorrichtung unmittelbar vor der Umformvorrichtung angeordnet, so dass kein weiteres Behandlungsaggregat zur Behandlung der Kunststoffvorformlinge (ausgenommen deren Transport) zwischen der Umformvorrichtung und der Sterilisationsvorrichtung angeordnet ist. Bevorzugt ist die Sterilisationsvorrichtung zwischen einer Heizvorrichtung und der Umformvorrichtung angeordnet. Denkbar wäre aber auch, dass die Sterilisationsvorrichtung vor dem Ofen bzw. einer/der Heizvorrichtung oder im Ofen bzw. in einer/der Heizvorrichtung angeordnet ist.

Bevorzugt verwendet bzw. verwenden die Sterilisationsvorrichtung(en) zur Sterilisierung des Kunststoffvorformlings lediglich ein Sterilisationsmedium und bevorzugt H₂O₂. Bevorzugt sind weitere Sterilisier- und/oder Entkeimungsverfahren in einer Heizeinrichtung zur Erwärmung der Kunststoffvorformlinge vor deren Umformung in der Umformvorrichtung nicht mehr erforderlich. Denkbar ist aber auch, dass die Sterilisationsvorrichtung der Heizeinrichtung vorgeschaltet ist und/oder innerhalb der Heizeinrichtung angeordnet ist.

Denkbar ist, dass für einen Entkeimungs- und/oder Sterilisiervorgang und/oder Inaktivierungsvorgang UV-Lampen eingesetzt werden. Weiterhin denkbar ist, dass ein Inaktivierungseffekt dadurch hervorgerufen wird, dass ein Entkeimungsagens, welches an dem zu steriliserenden Kunststoffvorformling aufgebracht wird, mit heißer Luft und/oder IR-Strahlung bestrahlt wird. Insbesondere ist auch denkbar, dass die Sterilisationsvorrichtung dazu geeignet und bestimmt ist, eine thermische Inaktivierung von Mikroorganismen mittels IR_Behandlung und/oder Hitze durchzuführen.

Denkbar ist auch, dass zur Sterilisation (durch die Sterilisationsvorrichtung(en)) eine chemisch-thermische Sterilisation vorgenommen wird, bei welcher ein Sterilisationsmittel mit erhöhter Temperatur und/oder bei erhöhter Temperatur der Kunststoffvorformlinge aufgesprüht (z.B. Peressigsäure oder Wasserstoffperoxid) und/oder bevorzugt nach einer Einwirkzeit mittels Sterilwasser oder mit Heißluft entfernt wird.

Bevorzugt ist die Sterilisationsvorrichtung bzw. sind die Sterilisationsvorrichtungen dazu geeignet und bestimmt, (auf dem sterilisierten Bereich) die Anzahl der lebenden Individuen um wenigstens sechs Zehnerpotenzen (10^{- 6}) zu vermindern. Insbesondere ist die Sterilisationsvorrichtung dazu geeignet und bestimmt, eine derartige Sterilisierung eines jeweiligen zu sterilisierenden Bereichs vorzunehmen, dass der Restgehalt an vermehrungsfähigen Mikroorganismen in einer Einheit des Sterilisierguts höchstens 10^{- 6} beträgt.

In einer bevorzugten Ausführungsform weist die Umformvorrichtung zum Umformen von Kunststoffvorformlingen zu Kunststoffbehältnissen wenigstens eine Sterilisations-Aufrechterhaltungsvorrichtung auf, welche dazu geeignet und bestimmt ist, einen vorgegebenen Sterilisationsgrad und/oder Reinheitsgrad der Innenwandung der umzuformenden und/oder wenigstens teilweise umgeformten Kunststoffvorformlinge aufrecht zu erhalten. Die Anmelderin hat herausgefunden, dass trotz einer derartigen bauraum-beanspruchenden Sterilisations-Aufrechterhaltungsvorrichtung die obig angegebenen maximalen Abstände realisierbar sind.

Die Sterilisations-Aufrechterhaltungsvorrichtung könnte dabei (rein) mechanisch ausgestaltet sein, etwa als (insbesondere vollumfängliche) Umhausung bzw. Gehäuse der Umformvorrichtung, mittels welcher Partikel und Staub aus einem äußeren nicht-sterilen Umgebungsbereich (etwa der Produktionshalle) von dem Inneren des Gehäuses bzw. der Umhausung abgehalten bzw. abgeschirmt werden. Zusätzlich kann vorgesehen sein, dass an wenigstens einer Position innerhalb des Gehäuses der Umformvorrichtung und/oder an einer Zuführöffnung der Umformvorrichtung, bevorzugt kontinuierlich, Sterilisationsmittel (wie etwa H₂O₂) zugeführt wird und die umzuformenden Kunststoffvorformlinge hiermit (insbesondere vor einem Schließen der Umformungsstationen) beaufschlagt werden.

Bevorzugt ist die Sterilisations-Aufrechterhaltungsvorrichtung dazu geeignet und bestimmt, die sterilisierten Bereiche des Kunststoffvorformlings bzw. eines hieraus entstandenen Kunststoffbehältnisses auf einem vorgegebenen Sterilisationsgrad und/oder Reinheitsgrad der Innenwandung und/oder der Außenwandung (insbesondere die gesamte Innenoberfläche und/oder die gesamte Außenoberfläche) zu halten, welcher wenigstens einer Reduktion der Keimzahl um mindestens 3 Zehnerpotenzen, bevorzugt mindestens 4 Zehnerpotenzen, bevorzugt wenigstens 5 Zehnerpotenzen und besonders bevorzugt wenigstens 6 Zehnerpotenzen im Vergleich zu einem entsprechenden nicht-sterilisierten Bereich der Innenwandung des Kunststoffvorformlings bzw. Kunststoffbehältnisses entspricht. Bevorzugt wird dieser vorgegebene Sterilisationsgrad und/oder Reinheitsgrad während des Umformvorgangs und besonders bevorzugt in der gesamten Umformvorrichtung aufrechterhalten (insbesondre mittels der Sterilisations-Aufrechterhaltungsvorrichtung).

Bevorzugt ist die Sterilisations-Aufrechterhaltungsvorrichtung durch das Vorsehen eines (nachfolgend näher beschriebenen) Reinraums realisiert, welcher bevorzugt einen Sterilisations- und/oder Reinheitsgrad aufweist, in welchem bevorzugt gegenüber dem nicht-sterilen Umgebungsbereich eine Reduktion von vermehrungsfähigen Mikroorganismen (Abtötung und/oder irreversible Inaktivierung) um mindestens 6 Zehnerpotenzen. Die Anzahl der lebenden Individuen (insbesondere auf und/oder an den sterilisierten Bereichen der umzuformenden Kunststoffvorformlingen) ist in dem Reinraum bevorzugt um wenigstens sechs Zehnerpotenzen (also auf ein Millionstel, ) vermindert (im Vergleich zu den entsprechenden Bereichen des Kunststoffvorformlings in einem nicht-sterilen Umgebungsbereich), so dass bevorzugt der Restgehalt an vermehrungsfähigen Mikroorganismen in einer Einheit des Sterilisierguts höchstens 10⁻⁶ beträgt.

In einer bevorzugten Ausführungsform ist die Anlage in einem Sterilisierbetrieb sowie in einem hiervon verschiedenen Produktionsbetrieb betreibbar. Bevorzugt unterscheidet sich der Sterilisierbetrieb von dem Produktionsbetrieb dadurch, dass in dem Sterilisierbetrieb einer Zuführleitung von zur Umformung vorgesehenem fließfähigen Medium ein Sterilisationsmedium zugeführt wird. Dies bietet den Vorteil, dass keine kontinuierliche Zuführung von Sterilisationsmedium erforderlich ist, sondern insbesondere lediglich bei Umrüstungen der Umformvorrichtung der Produktionsbetrieb unterbrochen und die Umformvorrichtung sterilisiert werden muss, so dass Sterilisiermedium ressourcenschonend verwendet werden kann.

Bevorzugt weist die Umformvorrichtung einen stationären Teil sowie einen drehenden Teil auf, wobei die Zuführung von fluidem Medium, welches zur Durchführung des Umformvorgangs zur Expansion der Kunststoffvorformlinge durch Beaufschlagung dieser mit dem fluiden Medium verwendet wird, aus dem stationären Teil der Umformvorrichtung in den drehenden Teil der Umformvorrichtung über eine Drehverteileinrichtung erfolgt. Bevorzugt ist wenigstens ein (Luft-) Filter zur Keimzahlreduktion und/oder Luftfiltration in dem fluiden Medium in dem drehenden Teil der Vorrichtung und/oder in einem Ringkanal zur (temporären) Speicherung des fluiden Mediums vorgesehen.

Bevorzugt wird in dem Sterilisationsbetrieb ein Ventil zur Zuführleitung des fluiden Mediums geöffnet, welches bevorzugt in dem stehenden Teil der Umformvorrichtung angeordnet ist, und durch dieses Sterilisationsmittel zum Sterilisieren der Zuführleitungen und/oder der Blasformeinrichtungen und/oder der Blasdüse zugeführt. Bevorzugt wird als Sterilisationsmittel H202 (insbesondere in gasförmiger Form) und/oder feuchte Hitze (Dampfsterilisation; beispielsweise gespannter, gesättigter Wasserdampf 121°C/15 min. 134°C/3 min Haltezeit) und/oder trockene Hitze (Heißluftsterilisation, beispielsweise bewegte Heißluft, etwa 180°C/30min Einwirkungszeit) und/oder ein physikalisch-chemisches Niedertemperatur-Verfahren (etwa mittels Ethylenoxid und/oder Formaldehyd-Wasserdampf und/oder via Plasmasterilisation) verwendet.

In dem Produktionsbetrieb wird bevorzugt kein Sterilisationsmittel kontinuierlich dem Innenraum und/oder den Zuführleitungen für (für die Expansion bzw. Umformung der Kunststoffbehältnisse verwendetes bzw. zu verwendendes) fluides Medium zugeführt.

Bevorzugt wird im Sterilisierbetrieb Sterilisationsmedium über Öffnungen in einer Isolatorwand (eines Isolators der Umformvorrichtung) in den Isolator (der Umformvorrichtung) geleitet wird. Bevorzugt wird im Sterilisierbetrieb Sterilisationsmedium über Öffnungen in einer Außenwandung der Umformvorrichtung, welche einen Innenraum der Umformvorrichtung (insbesondere einen Reinraum) gegenüber einer äußeren Umgebung der Umformvorrichtung abgrenzt (insbesondere luftdicht), in den Innenraum der Umformvorrichtung (insbesondere in den Reinraum) zugeführt bzw. geleitet.

In einer weiter vorteilhaften Ausführungsform wird in dem Produktionsbetrieb über die Zuführleitung gefilterte Luft und insbesondere HEPA-gefilterte und/oder mittels Schwebstofffilter (bevorzugt Hochleistungs-Partikelfilter (EPA = Efficient Particulate Air) oder HEPA (Akronym für High-Efficiency Particulate Air/Arrestance) und/oder Hochleistungs-Schwebstofffilter (ULPA Abkürzung für "Ultra-Low Penetration Air")) gefilterte Luft zum Umformen der Kunststoffvorformlinge zugeführt.

Bevorzugt handelt es sich bei der Umformvorrichtung um eine sterile Umformvorrichtung.

Bei einer bevorzugten Ausführungsform sind die Blasformseitenteile jeweils an einem ersten Formträger und einem zweiten Formträger angeordnet, welche zum Öffnen und/oder Schließen gegenüber einer Schwenkachse bewegbar sind. Die Blasformseitenteile sind dabei bevorzugt austauschbar and den Formträgern angeordnet. Bevorzugt ist auch das Bodenteil, insbesondere austauschbar, an einem Bodenteilträger angeordnet.

Bei einer weiter bevorzugten Ausführungsform erfolgt eine Öffnungs- und/oder Schließbewegung des ersten Formträgers um einen ersten Winkel und eine Öffnungs- und/oder Schließbewegung des zweiten Formträgers um einen zweiten Winkel, wobei der erste Winkel und der zweite Winkel im Wesentlichen identisch sind.

Bevorzugt führen demnach die beiden Formträger eine identische Bewegung aus. Beide Formträger sind demnach bevorzugt beweglich ausgebildet bzw. angeordnet. Dies ist insbesondere vorteilhaft, da hierdurch weniger Platz für die Öffnungsbewegung benötigt wird. Die Öffnungs- und/oder Schließbewegung der Formträger trägt demnach auch dazu bei, dass die Umformungsstationen näher zueinander angeordnet werden können und somit der Durchmesser des Transportträgers verringert werden kann.

Bevorzugt sind die Formträger an einer stationären Schwenkachse bzw. Schwenkwelle angeordnet bzw. gelagert und gegenüber dieser bewegbar. Die Schwenkachse verbindet dabei bevorzugt beide Formträger (mechanisch) miteinander. Vorteilhaft rotieren beide Formträger bezogen auf eine feststehende Lagerachse der Schwenkachse um den im Wesentlichen gleichen Winkel. Zwischen der Lagerachse und den Formträgern sind bevorzugt Lagerelemente in Form von abgedichteten Wälzlagern oder Gleitlagern angeordnet.

Besonders bevorzugt erfolgt die Öffnungs- und Schließbewegung der Formträger spiegelbildlich um eine geometrische Symmetrieachse. Bei der Öffnungs- und Schließbewegung der Formträger handelt es sich dabei bevorzugt um eine Schwenkbewegung und insbesondere eine Schwenkbewegung um einen vorgegebenen Winkel.

Die Bewegung der Formträger wird bevorzugt über wenigstens eine Führungskurve gesteuert. Das Öffnen der Formträger dient bevorzugt insbesondere dazu, einen Kunststoffvorformling in die Blasformeinrichtung einzusetzen und nach der Umformung ein umgeformtes Kunststoffbehältnis wieder aus der Blasformeinrichtung entnehmen zu können. Auch zum Austauschen der Blasformteile, wie die Blasformseitenteile und das Bodenteil, ist ein Öffnen der Formträger erforderlich. Das Öffnen und Schließen der Formträger wird daher bevorzugt in bestimmten bzw. vorgegebenen Winkelbereichen des Transportträgers vorgenommen.

Dass die Öffnungs- und/oder Schließbewegung des ersten Formträgers um einen ersten Winkel und die Öffnungs- und/oder Schließbewegung des zweiten Formträgers um einen zweiten Winkel im Wesentlichen identisch sind, bedeutet dabei, dass die Öffnungs- und/oder Schließbewegung des ersten Formträgers um den ersten Winkel und die Öffnungs- und/oder Schließbewegung des zweiten Formträgers um den zweiten Winkel um nicht mehr als 3° - 10°, bevorzugt um nicht mehr als 2° - 7° und besonders bevorzugt um nicht mehr als 1° - 5° voneinander abweichen. Der Öffnungswinkel zwischen den zwei Formträgern liegt bevorzugt dabei zwischen 0° und 150°.

Bei einer bevorzugten Ausführungsform weist die Anlage einen Reinraum und/oder Sterilraum auf, welcher von mehreren Wandungen begrenzt wird und innerhalb dessen die Kunststoffvorformlinge zu den Kunststoffbehältnissen expandiert werden. Bevorzugt weist die Umformvorrichtung eine Dichtungsvorrichtung auf, um den Reinraum gegenüber einer unsterilen Umgebung abzudichten. Insbesondere wird dabei durch diese Dichtungseinrichtung verhindert, dass unsterile Umgebungsluft und Keime in den Reinraum gelangen und diesen kontaminieren. Dies bietet den Vorteil, dass eine Gefahr einer Rekontamination der sterilisierten Kunststoffvorformlinge, welche der Umformvorrichtung zugeführt werden, durch die Reinraumbedingungen möglichst gering gehalten werden kann.

Mit anderen Worten ist besonderes bevorzugt die Blasmaschine bzw. sind der (Transport-) Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Bevorzugt wird der Reinraum dabei von wenigstens einer stehenden Wandung und einer sich gegenüber dieser stehenden Wandung bewegenden Wandung begrenzt. Dabei kann beispielsweise der Transportträger, an dem die Blasformeinrichtungen angeordnet sind, bereits eine dieser Wandungen und insbesondere die sich bewegende Wandung aufweisen bzw. ausbilden. Vorteilhaft ist der Reinraum ring- oder torusartig um die Blasstationen bzw. Umformungsstationen und/oder den Transportpfad der Kunststoffbehältnisse ausgebildet.

Bei einer weiteren bevorzugten Ausführungsform weist die Dichtungseinrichtung wenigstens einen mit einer Flüssigkeit befüllbaren umlaufenden Kanal auf, in welchen eine umlaufende Wandung ragt, wobei es sich bei dieser Wandung bevorzugt um wenigstens ein Schwert und besonders bevorzugt um genau ein Schwert handelt. Es wird demnach vorgeschlagen zur Abdichtung des Reinraums ein sogenanntes Wasserschloss zu verwenden und insbesondere ein einfaches Wasserschloss, welches genau ein Schwert aufweist, welches in das fließfähige Medium eintaucht und so einen unsterilen Bereich von dem sterilen Bereich trennt. Durch die Verwendung eines einfachen Wasserschlosses, im Gegensatz zu einem doppelten Wasserschloss, kann ebenfalls ein kleinerer Footprint der Anlage ermöglicht werden, da dieses weniger Platz benötigt.

Insbesondere weist die Dichtungseinrichtung bevorzugt ein einfaches Wasserschloss auf, welches genau ein Schwert aufweist, welches in einen mit einer Flüssigkeit befüllten, umlaufenden Kanal eintaucht und so einen unsterilen Bereich von dem sterilen Bereich trennt.

Die umlaufende Wandung der Dichtungseinrichtung ist dabei bevorzugt drehbar bezüglich des Kanals ausgebildet. Bevorzugt ist dabei die Drehbewegung dieser Wandung an die Drehbewegung des Transportträgers gekoppelt. Bei dieser Wandung handelt es sich damit bevorzugt um ein umlaufendes Schwert, welches einen Bestandteil des Wasserschlosses, bzw. der hydraulischen Dichtung bildet. Besonders bevorzugt taucht diese Wandung in die in dem Kanal befindliche Flüssigkeit. Es wäre umgekehrt auch denkbar, dass der Kanal drehbar ist und die umlaufende Wandung stationär ausgebildet ist.

Bevorzugt ist der umlaufende Kanal durch die umlaufende Wandung der Dichtungseinrichtung in einem radial inneren Kanalabschnitt und einem radial äußeren Kanalabschnitt unterteilt, wobei das Schwert bevorzugt in einen Bereich zwischen dem inneren Kanalabschnitt und dem äußeren Kanalabschnitt in die Flüssigkeit eintaucht.

Bei einer vorteilhaften Ausführungsform weist die Transporteinrichtung in einem Abschnitt des Transportpfads zwischen der Umformvorrichtung und der Füllvorrichtung wenigstens drei Transporteinheiten mit einem um eine jeweilige Mittelachse bewegbaren, insbesondere drehbaren, Transportträger, wie Transportsterne und/oder Teilungsverzugssterne und/oder Zuführsterne, aufweist. Die Realisierung eines kleinen Footprints einer Anlage wird unter anderem auch dadurch beeinflusst, als ein ausreichend langer Transportweg zwischen der Umformvorrichtung und der Füllvorrichtung vorgesehen sein muss, so dass während dieses Transportwegs die gerade fertig-umgeformten Kunststoffbehältnisse bis zu deren Befüllung ausreichend abkühlen und/oder aushärten können, so dass eine hohe Qualität des Füllprodukts und des befüllten Behältnisses gewährleistet werden kann.

Bevorzugt ist die Umformvorrichtung und/oder die Füllvorrichtung als Rundläufer bzw. als Karussell ausgebildet, welche bevorzugt die Vielzahl von Umformungsstationen bzw. Blasstationen aufweisend die Blasformeinrichtungen (im Falle der Umformvorrichtung) und die Füllorgane (im Falle der Füllvorrichtung) um die jeweilige Mittelachse entlang einer Kreislinie transportieren.

Nach abgeschlossener Umformung bzw. Expansion werden die fertigen Kunststoffbehältnisse durch eine Entnahmeeinrichtung zur Aufnahme der Kunststoffbehältnisse, welche als ein drehbaren Transportstern, insbesondere als Teilungsverzugsstern, ausgebildet sein kann, aus der Umformvorrichtung der Kunststoffvorformlinge zu Kunststoffbehältnissen entnommen.

Bei einer bevorzugten Ausführungsform weist die Anlage eine Lüftungsvorrichtung zur Regulierung wenigstens einer vorgegebenen Eigenschaftsgröße einer in dem Bereich der Umformung der Kunststoffvorformlinge zu Kunststoffbehältnissen vorherrschenden Atmosphäre auf, wobei die Eigenschaftsgröße charakteristisch ist für eine physikalische Größe, wie ein Luftdruck und/oder eine Lufttemperatur und/oder eine Luftfeuchtigkeit und/oder eine Luftdichte, eine Strömungsgeschwindigkeit, und/oder eine physiko-chemische Größe, wie eine für eine Luftzusammensetzung charakteristische Größe, und/oder für eine Luftreinheitsgröße, wie einen Reinheitsgrad und/oder einen Sterilisationsgrad. Dabei ist die Lüftungsvorrichtung in Draufsicht auf die Anlage gesehen zwischen der Umformvorrichtung und der Füllvorrichtung angeordnet. Derartige Lüftungsvorrichtungen bieten den Vorteil, dass damit obig beschriebener vorgegebener Reinheitsgrad und/oder Sterilisationsgrad aufrechterhalten werden kann. So kann etwa in der Umformvorrichtung im Vergleich zur Umgebung (außerhalb einer Umhausung bzw. Gehäuses) ein Überdruck herrschen, so dass von dem äußeren Umgebungsbereich im Wesentlichen keine Luft in das Gehäuseinnere der Umformvorrichtung strömt. Weiterhin kann stetig bzw. kontinuierlich frische und/oder reine und/oder gefilterte Luft zugeführt werden, so dass eine gezielte Strömungsrichtung realisiert werden kann.

Derartige Lüftungsvorrichtungen nehmen ebenfalls einen vergleichsweise großen Bauraum in Anspruch. Bevorzugt wird die Lüftungsvorrichtung oberhalb der Umformvorrichtung und insbesondere seitlich oberhalb der Umformvorrichtung angeordnet. Unter seitlich ist insbesondere hier zu verstehen, dass die Lüftungsvorrichtung in ihrer Gesamtheit zwischen der Umformvorrichtung und der Füllvorrichtung angeordnet ist (in Bezug auf deren Mittelachsen jeweils). Bevorzugt erstreckt sich die Lüftungsvorrichtung in Draufsicht auf die Anlage gesehen nicht über einen, der Fülleinrichtung gegenüberliegenden Randbereich der Umformvorrichtung hinaus. Bevorzugt erstreckt sich die Lüftungsvorrichtung - in Draufsicht auf die Anlage gesehen - nicht über die Fülleinrichtung hinaus. Besonders bevorzugt ist die Lüftungsvorrichtung derart angeordnet - in Draufsicht auf die Anlage gesehen - dass kein Überlapp mit der Füllvorrichtung besteht. Dies ist vorteilhaft, da die Füllvorrichtung selbst eine Vielzahl von Medienzu- und/oder abführungen erfordert, die bevorzugt oberhalb der Füllvorrichtung angeordnet sind.

Die Lüftungsvorrichtung stellt bevorzugt das zur Umformung der Kunststoffvorformlinge verwendete fluide Medium, insbesondere die Blasfluft, mittels welchem bzw. mittels welcher die Kunststoffvorformlinge zu deren Expansion beaufschlagt werden, zur Verfügung. Zusätzlich oder alternativ stellt die Lüftungsvorrichtung (insbesondere der Umformvorrichtung) bevorzugt Steuerluft, welche insbesondere zum Ansteuern verschiedener (insbesondere pneumatische) Elemente (der Umformvorrichtung) verwendet wird, und/oder Sterilluft zur Verfügung.

Insbesondere kann die Anlage in einer Eckaufstellung der Anlage oder in einer Linearaufstellung der Anlage angeordnet sein und sowohl in der Eckaufstellung als auch in der Linearaufstellung obig angegebene maximale Werte für den Abstand zwischen der Umformvorrichtung und der Füllvorrichtung (gesehen in Bezug auf deren Mittelachsen) aufweisen. Bevorzugt kann eine Eckaufstellung der Anlage vorliegen.

Unter einer Eckaufstellung der Anlage ist insbesondere eine Anordnung zu verstehen, in welcher eine Behältnishaupttransportrichtung mit einer Verbindungsrichtung, welche sich im Wesentlichen von der Mittelachse der Umformvorrichtung zur Mittelachse der Füllvorrichtung erstreckt, einen Winkel einschließt, welcher größer ist als 15°, bevorzugt größer als 20° und besonders bevorzugt größer als 28°.

Wird in Bezug auf einen Prozesswinkel der Umformvorrichtung, ein Nullwinkel als Winkelposition festgelegt, welche (im Wesentlichen) genau (mittig) zwischen einer Zuführeinrichtung (wie einen Zuführstern), welche die umzuformenden Kunststoffvorformlinge der Umformvorrichtung zuführt, und einer Abführeinrichtung ist, welche die fertig umgeformten Kunststoffvorformlinge aus der Umformvorrichtung abführt, wird unter der Behältnishaupttransportrichtung bevorzugt eine 270° Richtung in Bezug auf diesen Nullwinkel (Messung entgegen den Uhrzeigersinn) verstanden. Dies wird in den Figuren illustriert.

Unter einer Behältnishaupttransportrichtung ist dabei insbesondere eine Verbindungsrichtung von einem Schwerpunkt und/oder einem Mittelpunkt und/oder einer Mittelachse einer Zuführeinrichtung, insbesondere eines Zuführsterns der Umformvorrichtung und Schwerpunkt und/oder einem Mittelpunkt und/oder einer Mittelachse einer Abführeinrichtung, welche die fertig-umgeformten Behältnisse aus der Umformvorrichtung abführt, zu verstehen. Lässt man die Behandlungsaggregate wie die Umformvorrichtung außer Acht, werden die Behältnisse um eine Verbindungsgerade (entlang der Verbindungsrichtung) von dem Zuführstern bzw. der Zuführvorrichtung zu der Abführvorrichtung transportiert (bzw. entlang einer Kreislinie um diese herum).

Unter einer Linearaufstellung der Anlage ist insbesondere eine Anordnung zu verstehen, in welcher eine Behältnishaupttransportrichtung mit einer Verbindungsrichtung, welche sich im Wesentlichen von der Mittelachse der Umformvorrichtung zur Mittelachse der Füllvorrichtung erstreckt, einen Winkel einschließt, welcher nicht größer ist als 10°, bevorzugt nicht größer als 8° und besonders bevorzugt nicht größer als 5°.

Bei einer bevorzugten Ausführungsform weisen im Falle einer Eckaufstellung der Anlage mit einer Umformvorrichtung, bevorzugt mit einer Umformvorrichtung mit einer maximalen Anzahl von 24 Umformungsstationen, die Umformvorrichtung und die Füllvorrichtung einen maximalen Abstand von 4,5 m, bevorzugt von 4,2 m und besonders bevorzugt von 4,05 m zueinander in Bezug auf deren jeweilige Mittelachsen auf. Damit kann mit einer Eckaufstellung ein noch kleinerer Abstand zwischen der Füllvorrichtung und der Umformvorrichtung realisiert werden. Denkbar ist auch, dass eine in Eckaufstellung vorliegende bzw. angeordnete Anlage mehr als 24, beispielsweise 30 Umformungsstationen, aufweist.

Bei einer bevorzugten Ausführungsform weisen im Falle einer Eckaufstellung der Anlage mit einer Umformvorrichtung mit einer maximale Anzahl von 16 Umformungsstationen, die Umformvorrichtung und die Füllvorrichtung einen maximalen Abstand von 4 m, bevorzugt von 3,8 m und besonders bevorzugt von 3,5 m zueinander in Bezug auf deren jeweilige Mittelachsen auf. Damit kann mit einer Eckaufstellung bei Umformvorrichtungen mit kleineren maximalen Anzahlen von Umformungsstationen ein noch kleinerer Abstand zwischen der Füllvorrichtung und der Umformvorrichtung realisiert werden.

Bevorzugt ist im Falle von Umformvorrichtungen mit 4 - 16 Umformungsstationen ein Durchmesser des Transportträgers kleiner als 2 m. Besonders bevorzugt ist dabei die Vielzahl von Umformungsstationen, die ausgewählt ist aus einer Anzahl zwischen 4 - 16 Umformungsstationen, auf einem Transportträger mit einem Durchmesser von größer oder gleich 0,5 m und kleiner oder gleich 2 m angeordnet.

Bevorzugt ist im Falle von Umformvorrichtungen mit 17 - 35 Umformungsstationen ein Durchmesser des Transportträgers kleiner als 3 m. Besonders bevorzugt ist dabei die Vielzahl von Umformungsstationen, die ausgewählt ist aus einer Anzahl von Umformungsstationen zwischen 17 - 35 Umformungsstationen, auf einem Transportträger mit einem Durchmesser von größer oder gleich 2,1 m und kleiner oder gleich 3 m angeordnet.

Damit wird bevorzugt vorgeschlagen, die Anzahl der Umformungsstationen auf einem Transportträger zu erhöhen bzw. an einen kleineren Transportträger mehrere Umformungsstationen als bisher anzuordnen. Auch hierdurch kann, im Vergleich zu den bisher aus dem Stand der Technik der Anmelderin bekannten Blasformmaschinen, ein kleinerer Footprint bzw. Platzbedarf der Anlage und ein Näher-Aneinanderstehen der Umformvorrichtung an der Füllvorrichtung (in Bezug auf deren Mittelachsen) erreicht werden. Im Stand der Technik ist der (Teilkreis)Durchmesser des Transportträgers im Verhältnis zu der Anzahl der Umformungsstationen, welche an dem Transportträger angeordnet ist, sehr hoch. Beispielsweise ist es aus dem internen Stand der Technik der Anmelderin bekannt, dass an einem Transportträger mit einem Durchmesser von 2,3 m lediglich 12 - 16 Umformungsstationen angeordnet sind und bei einem Durchmesser von 3,4 m 20 - 24 Umformungsstationen.

Die einzelnen an dem Transportträger angeordneten Umformungsstationen weisen bevorzugt jeweils einen Abstand zwischen 0,05 m und 1 m, bevorzugt zwischen 0,06 m und 0,8 m und besonders bevorzugt zwischen 0,07 m und 0,5 m zueinander auf. Besonders bevorzugt weisen die einzelnen Umformungsstationen bei einem Durchmesser des Transportträgers von kleiner 2 m einen Abstand zwischen 0,08 m und 0,6 m, bevorzugt zwischen 0, 1 m und 0,5 m zueinander auf oder bei einem Durchmesser des Transportträgers von kleiner 3 m einen Abstand zwischen 0,05 m und 0,2 m, bevorzugt 0,07 m und 0,18m zueinander auf. Der genaue Abstand der Umformungsstationen zueinander ist dabei abhängig von dem genauen Durchmesser des Transportträgers und der Anzahl der Umformungsstationen. Beispielsweise beträgt der Abstand der einzelnen Umformungsstationen bei einem Transportträger mit einem Durchmesser von 1,7 m und 14 Umformungsstationen ungefähr 0,12 m und bei einem Transportträger mit einem Durchmesser von 2,3 m und 22 Umformungsstationen ungefähr 0,1 m. Hierdurch können mehr Umformungsstationen auf vergleichsweise kleineren Durchmessern angeordnet werden, wodurch die Umformvorrichtung vorteilhaft näher an der Füllvorrichtung angeordnet werden kann.

Erfindungsgemäss ist ein Verhältnis zwischen einem Durchmesser des Transportträgers und einer Anzahl der Umformungsstationen kleiner als 0,14, bevorzugt kleiner als 0,13 und besonders bevorzugt kleiner als 0,12. Diese Verhältnisse sind vorteilhaft, da so ein optimales Verhältnis zwischen der Anzahl der Umformungsstationen und der Größe des Transportträgers ermöglicht wird, um diese möglichst klein zu wählen und somit den Platzbedarf zu reduzieren.

Durch das Einhalten dieser Verhältnisse können somit mehrere Stationen auf einer kleineren Plattform bzw. einem kleineren Transportträger angeordnet werden. Auch hierdurch kann für eine vorgegebene Anzahl an Umformungsstationen die Ausdehnung der Umformvorrichtung verringert werden, wodurch die Mittelachsen der Umformvorrichtung und der Füllvorrichtung näher aneinander angeordnet werden können.

Bevorzugt ist dabei ein Verhältnis zwischen einem Durchmesser des Transportträgers und einer Anzahl der Umformungsstationen größer als größer als 0,35, bevorzugt größer als 0,2.

Besonders bevorzugt ist ein Verhältnis zwischen einem Durchmesser des Transportträgers und einer Anzahl der Umformungsstationen kleiner als 0,14, oder größer als 0,2.

Bei einer bevorzugten Ausführungsform weist eine Umformungsstation eine Stationsleistung zwischen 2500 und 2800 Kunststoffbehältnissen pro Stunde auf. Mit anderen Worten können mit einer Umformungsstation zwischen 2500 und 2800 Kunststoffbehältnissen pro Stunde umgeformt werden.

Bei einer weiteren bevorzugten Ausführungsform weist die Vorrichtung eine Anlagenleistung zwischen 10.000 und 85.000 Kunststoffbehältnissen pro Stunde auf. Die Anlagenleistung ist dabei insbesondere abhängig von der Anzahl der Umformungsstationen der Vorrichtung.

Bevorzugt handelt es sich bei der Blasmaschine um eine Streckblasmaschine, was bedeutet, dass die Vorformlinge vor und/oder während der Expansion mittels einer Dehneinrichtung, insbesondere eines stangenförmigen Körpers, etwa einer Reckstange, in Längsrichtung gedehnt werden. Die Umformungsstationen, insbesondere die Blasstationen, weisen dabei jeweils Dehneinrichtungen, insbesondere stangenförmige Körper, etwa Reckstangen, auf, welche in die Kunststoffvorformlinge einführbar sind und die Kunststoffvorformlinge in ihrer Längsrichtung dehnen. Die Dehneinrichtungen, insbesondere die stangenförmigen Körper, etwa die Reckstangen, weisen dabei bevorzugt einen elektrischen Antrieb auf.

Bei einer vorteilhaften Ausführungsform weist die Umformvorrichtung zum Umformen von Kunststoffvorformlingen zu Kunststoffbehältnissen und bevorzugt weist jede Umformungsstation, insbesondere jede Blasstation, eine Temperiereinrichtung auf, welche dazu geeignet und bestimmt ist, Teile der Blasformeinrichtung zu temperieren, insbesondere Teile der Blasformeinrichtung zu erwärmen. Bevorzugt erfolgt dabei diese Erwärmung mittels elektrischer Energie oder mittels eines fließfähigen und insbesondere flüssigen Temperiermediums. So kann beispielsweise heißes Öl oder Wasser verwendet werden, um die Seitenteile der Blasform und/oder das Bodenteil der Blasform zu temperieren. Dabei kann dieses Temperieren mittels Kanälen erfolgen, welche in der Blasform selbst angeordnet sind und/oder auch mittels Kanälen, welche in Blasformschalen angeordnet sind und/oder auch in einem Blasformträger.

Bei einer vorteilhaften Ausführungsform weist die Anlage wenigstens eine Heizvorrichtung, welche Vorformlinge erhitzen bzw. erwärmen, Spritzgussvorrichtungen insbesondere zur Herstellung von den (Kunststoff-)Vorformlingen, Etikettieraggregate zum Etikettieren der befüllten (Kunststoff-)Behältnisse, (weitere) Sterilisationseinheiten, Verschließeinrichtung(en) zum Verschließen der befüllten Kunststoffbehältnisse oder dergleichen auf. Auch eine Kombination einzelner oder mehrerer dieser Vorrichtungen bzw. Aggregate in der Anlage sind bevorzugt.

Bevorzugt weist die Anlage eine Spritzgussvorrichtung (insbesondere zum Herstellen der Kunststoffvorformlinge auf). Bevorzugt ist der gesamte Weg zwischen der Spritzgussvorrichtung und der Füllvorrichtung und/oder einer Verschließvorrichtung (welche die durch die Füllvorrichtung befüllten Behältnisse verschließt) steril gehalten und/oder Teil des Reinraums. Insbesondere wird im Falle einer Anlage mit Spritzgussvorrichtung, der komplette Weg zwischen Spritzguß und Verschließer, steril gehalten.

Bevorzugt ist die Heizvorrichtung zur Erwärmung von Kunststoffvorformlingen in Transportrichtung der Kunststoffvorformlinge stromaufwärts der Umformvorrichtung zum Umformen der Kunststoffvorformlinge zu Kunststoffbehältnissen angeordnet.

Dabei werden die zu erwärmenden Kunststoffvorformlinge bevorzugt über eine Einführeinrichtung in die Heizvorrichtung eingebracht. Darin werden sie mittels der Transporteinrichtung entlang eines vorgegebenen Transportpfads durch die Heizvorrichtung transportiert. In der Heizvorrichtung ist, insbesondere an geradlinigen Transportabschnitten, eine Vielzahl von Heizkästen bzw. Heizelementen angeordnet, mittels welcher die Kunststoffvorformlinge insbesondere entsprechend eines vorgegebenen Temperaturprofils erwärmt werden. Das Temperaturprofil kann dabei in Längsrichtung eines Kunststoffvorformlings variabel sein.

Nach Durchlaufen der Heizvorrichtung werden die Kunststoffvorformlinge, bevorzugt mittels einer Transporteinrichtung, welche als Transportstern ausgebildet sein kann und welche Aufnahmeelemente zur Aufnahme der Kunststoffvorformlinge aufweist zur Vorrichtung zur Umformung der Kunststoffvorformlinge zu Kunststoffbehältnissen transportiert und in eine (geöffnete) Blasformeinrichtung eingebracht.

Die vorliegende Erfindung ist weiterhin gerichtet auf eine Anordnung zum einer Füllvorrichtung relativ zu einer Umformvorrichtung in einer Anlage zum Herstellen von befüllten Kunststoffbehältnissen aus, insbesondere mittels einer Sterilisationsvorrichtung zur Sterilisation wenigstens einer Innenwandung und/oder Außenwandung der Kunststoffvorformlinge, sterilisierten Kunststoffvorformlingen. Dabei weist die Anlage eine Transporteinrichtung zum Transportieren der Kunststoffvorformlinge sowie aus den Kunststoffvorformlingen durch Umformung entstandener Kunststoffbehältnisse entlang eines vorgegebenen Transportpfads durch die Anlage auf.

Weiterhin weist die Anlage die Umformvorrichtung zum Umformen der sterilisierten Kunststoffvorformlinge zu Kunststoffbehältnissen auf, wobei die Transporteinrichtung dazu geeignet und bestimmt ist, die sterilisierten Kunststoffvorformlinge der Umformvorrichtung zuzuführen, wobei die Umformvorrichtung einen um eine Mittelachse bewegbaren und insbesondere drehbaren Transportträger aufweist, an dem eine Vielzahl von Umformungsstationen zur Umformung jeweils eines Kunststoffvorformlings durch Beaufschlagung mit einem fließfähigen Medium zu einem Kunststoffbehältnis angeordnet ist.

Dabei weist die Anlage die Füllvorrichtung zum Befüllen der Kunststoffbehältnisse während deren wenigstens abschnittsweisen, im Wesentlichen entlang einer Kreislinie erfolgenden Transport um eine Mittelachse der Füllvorrichtung auf.

Erfindungsgemäß ist eine Anordnung der Umformvorrichtung und der Füllvorrichtung derart, dass diese einen maximalen Abstand zueinander in Bezug auf deren jeweilige Mittelachsen
- von 5,5 m, bevorzugt von 5,3 m, aufweisen und die Umformvorrichtung eine maximale Anzahl von 24 Umformungsstationen aufweist
   oder
- von 6,0 m, bevorzugt von 5,6 m, aufweisen und die Umformvorrichtung mehr als 24 Umformungsstationen aufweist.

Bevorzugt ist eine Anordnung der Umformvorrichtung und der Füllvorrichtung derart, dass diese einen maximalen Abstand zueinander in Bezug auf deren jeweilige Mittelachsen
- von 5,5 m, bevorzugt von 5,3 m, im Falle einer Umformvorrichtung mit einer maximalen Anzahl von 24 Umformungsstationen und/oder
- von 6,0 m, bevorzugt von 5,6 m, im Falle einer Umformvorrichtung mit mehr als 24 Umformungsstationen, aufweisen.

Die vorliegende Erfindung ist weiterhin gerichtet auf ein Verfahren nach zum Betreiben einer Anlage zum Herstellen von befüllten Kunststoffbehältnissen aus, insbesondere mittels einer Sterilisationsvorrichtung zur Sterilisation wenigstens einer Innenwandung und/oder Außenwandung der Kunststoffvorformlinge, sterilisierten Kunststoffvorformlingen. Die Anlage weist eine Transporteinrichtung auf, welche die Kunststoffvorformlinge sowie aus den Kunststoffvorformlingen durch Umformung entstandene Kunststoffbehältnisse entlang eines vorgegebenen Transportpfads durch die Anlage transportiert.

Die (zu betreibende) Anlage weist weiterhin eine Umformvorrichtung auf, welche die sterilisierten Kunststoffvorformlinge zu Kunststoffbehältnissen umformt, wobei die Transporteinrichtung die sterilisierten Kunststoffvorformlinge der Umformvorrichtung zuführt, wobei die Umformvorrichtung einen um eine Mittelachse bewegbaren und insbesondere drehbaren Transportträger aufweist, an dem eine Vielzahl von Umformungsstationen zur Umformung jeweils eines Kunststoffvorformlings durch Beaufschlagung mit einem fließfähigen Medium zu einem Kunststoffbehältnis angeordnet ist.

Die (zu betreibende) Anlage weist eine Füllvorrichtung zum Befüllen der Kunststoffbehältnisse während deren wenigstens abschnittsweisen, im Wesentlichen entlang einer Kreislinie erfolgenden Transport um eine Mittelachse der Füllvorrichtung auf.

Erfindungsgemäß weisen die Umformvorrichtung und die Füllvorrichtung einen maximalen Abstand zueinander in Bezug auf deren jeweilige Mittelachsen
- von 5,5 m, bevorzugt von 5,3 m, auf und die Umformvorrichtung weist eine maximale Anzahl von 24 Umformungsstationen auf
   oder
- von 6,0 m, bevorzugt von 5,6 m, auf und die Umformvorrichtung weist mehr als 24 Umformungsstationen auf.

Bevorzugt weisen die Umformvorrichtung und die Füllvorrichtung einen maximalen Abstand zueinander in Bezug auf deren jeweilige Mittelachsen
- von 5,5 m, bevorzugt von 5,3 m, im Falle einer Umformvorrichtung (8) mit einer maximalen Anzahl von 24 Umformungsstationen und/oder
- von 6,0 m, bevorzugt von 5,6 m, im Falle einer Umformvorrichtung (8) mit mehr als 24 Umformungsstationen, auf.

Es wird also auch im Rahmen des erfindungsgemäßen Verfahrens vorgeschlagen, dass eine bauraumsparende Ausgestaltung durch einen maximalen Abstand zwischen der Umformvorrichtung und der Füllvorrichtung realisiert wird.

Dabei ist die oben beschriebene Anlage insbesondere dazu eingerichtet und dafür vorgesehen, dieses beschriebene Verfahren durchzuführen bzw. betrieben zu werden, d. h., dass alle für die obig beschriebene Anlage ausgeführten Merkmale ebenso für das hier beschriebene Verfahren offenbart sind und umgekehrt. Daneben werden in einem bevorzugten Verfahren zum Betrieb der Anlage diejenigen Verfahrensschritte einzeln oder in Kombination miteinander ausgeführt welche obig im Rahmen der Anlage als Eignungsmerkale zur Ausführung ("geeignet und/oder bestimmt") beschrieben wurden.

Weitere Vorteile und Ausführungsformen ergeben sich aus den beigefügten Zeichnungen: Darin zeigen:
- Fig. 1: eine schematische Darstellung einer erfindungsgemäßen Anlage zum Herstellen von befüllten Kunststoffbehältnissen gemäß einer bevorzugten Ausführungsform in einer Eckaufstellung; und
- Fig. 2: eine schematische Darstellung einer erfindungsgemäßen Anlage zum Herstellen von befüllten Kunststoffbehältnissen gemäß einer bevorzugten Ausführungsform in einer Linearaufstellung.

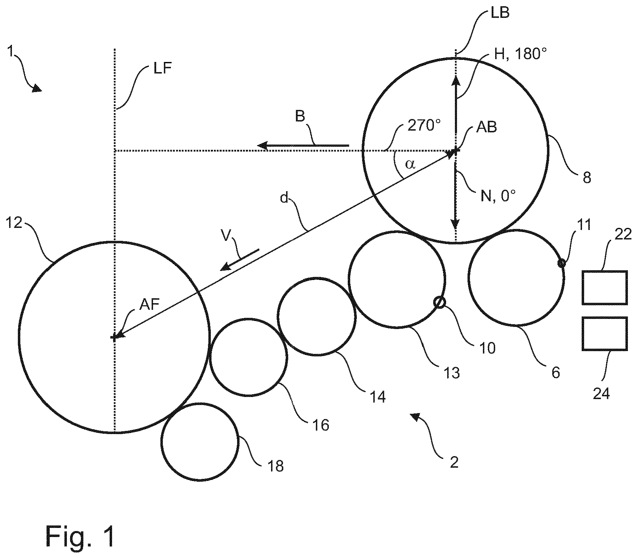

Fig. 1 zeigt eine schematische Darstellung einer erfindungsgemäßen Anlage 1 zum Herstellen von befüllten Kunststoffbehältnissen 10 gemäß einer bevorzugten Ausführungsform in einer Eckaufstellung.

Kunststoffvorformlinge 11 werden bevorzugt vor deren Zuführung zu einer Umformvorrichtung 8 mittels einer, hier schematisch dargestellten, Heizvorrichtung 24 erwärmt und mittels einer, hier ebenfalls schematisch dargestellten, Sterilisiervorrichtung 22 (jedenfalls ein insbesondere vollständiger Innenwandungsbereich und bevorzugt ein insbesondere vollständiger Außenwandungsbereich und/oder Mündungsbereich) sterilisiert.

Eine Zuführeinrichtung 6, etwa ein Zuführstern, führt die umzuformenden Kunststoffvorformlinge der Umformvorrichtung 8 zu, in welcher sie wenigstens abschnittsweise entlang einer (dargestellten) Kreislinie um die Mittelachse AB transportiert werden, während sie innerhalb einer Umformungsstation mit fluidem Medium beaufschlagt und hierdurch expandiert werden. Schließlich werden sie von einer Abführeinrichtung 13, bevorzugt einem Teilungsverzugsstern, aus der Umformvorrichtung nach erfolgtem Umformvorgang abgeführt.

Das Bezugszeichen N kennzeichnet als Referenzrichtung dabei einen 0°-Prozesswinkel der Umformvorrichtung, welcher eine (mittige) (Winkel-)Position zwischen der Zuführposition der Kunststoffvorformlinge und der Abführposition der Kunststoffbehältnisse anzeigt. Eine hierzu senkrechte Richtung (270°) wird als Behältnishaupttransportrichtung B bezeichnet bzw. definiert. Diese Richtung zeigt diejenige Hauptbewegungsrichtung an, in welche die Kunststoffvorformlinge (dann als Behältnisse) im Wesentlichen zur nächsten Behandlungsvorrichtung weiter transportiert werden (abgesehen von deren grundsätzlichem ringförmigen Transport).

Über wenigstens einen und bevorzugt über eine Vielzahl von Transportsternen 14 (der Transporteinrichtung 2) wird das Kunststoffbehältnis an eine Zuführeinrichtung (etwa einen Teilungsverzugsstern) 16 übergeben, welche wiederum das zu befüllende Kunststoffbehältnis an die Füllvorrichtung 12 übergibt. In der Füllvorrichtung werden die zu befüllenden Kunststoffbehältnisse um eine Mittelachse AF insbesondere (wenigstens abschnittsweise) entlang einer Kreislinie transportiert.

Das Bezugszeichen V kennzeichnet die Verbindungsrichtung zwischen der Mittelachse AB der Umformvorrichtung 8 und der Mittelachse AF der Füllvorrichtung 12.

Der Abstand d zwischen der Mittelachse AB der Umformvorrichtung 8 und der Mittelachse AF der Füllvorrichtung 12 beträgt
- maximal 5,5 m, bevorzugt maximal 5,3 m, im Falle einer Umformvorrichtung 8 mit einer maximalen Anzahl von 24 Umformungsstationen und/oder
- maximal 6,0 m, bevorzugt maximal 5,6 m, im Falle einer Umformvorrichtung 8 mit mehr als 24 Umformungsstationen.

Fig. 1 stellt dabei eine bevorzugte Eckaufstellung dar, welche sich dadurch auszeichnet, dass der Winkel α, den die Behältnishaupttransportrichtung B mit der Verbindungsrichtung V einschließt, größer ist als 15°, bevorzugt größer als 20° und besonders bevorzugt größer als 28°.

Das Bezugszeichen 18 kennzeichnet eine Abführeinrichtung (etwa einen Abführstern) zum Abführen der gefüllten Kunststoffbehältnisse aus der Füllvorrichtung 12.

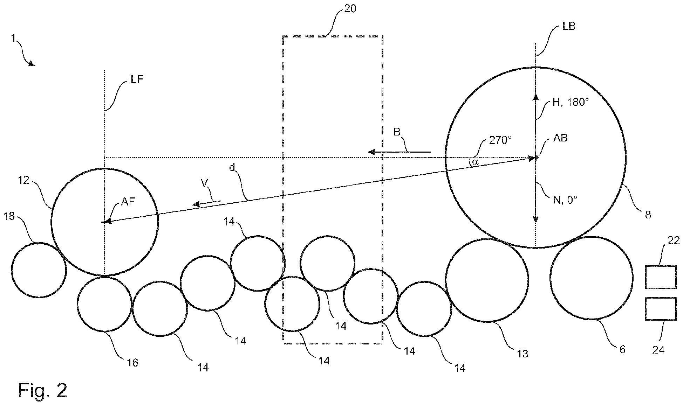

Fig. 2 zeigt eine schematische Darstellung einer erfindungsgemäßen Anlage 1 zum Herstellen von befüllten Kunststoffbehältnissen 10 gemäß einer bevorzugten Ausführungsform in einer bevorzugten Linearaufstellung (im Unterschied zur Eckaufstellung in Fig. 1). Gleiche Bezugszeichen kennzeichnen dabei gleiche oder gleich wirkende Elemente oder Vorrichtungen oder Größen.

Eine Linearaufstellung der Anlage 1 ist insbesondere eine Anordnung zu verstehen, in welcher die Behältnishaupttransportrichtung B mit der Verbindungsrichtung V einen Winkel einschließt, welcher nicht größer ist als 10°, bevorzugt nicht größer als 8° und besonders bevorzugt nicht größer als 5°.

Das Bezugszeichen 20 kennzeichnet weiterhin eine schematische Darstellung einer Lüftungsvorrichtung (insbesondere Lüftungsgerät), welche (in Verbindungsrichtung V gesehen) zwischen der Umformvorrichtung 8 und der Füllvorrichtung 12 angeordnet ist.

Im Unterschied zu der in Fig. 1 gezeigten Anlage 1 weist die in Fig. 2 dargestellte Anlage 1 eine Transporteinrichtung 2 mit einer Vielzahl (hier 7) von Transporteinheiten 14 zwischen der Abführeinrichtung 13 und der Zuführeinrichtung 16 auf.

### Bezugszeichenliste

- 1: Anlage
- 2: Transporteinrichtung
- 8: Umformvorrichtung
- 10: Kunststoffbehältnis
- 11: Kunststoffvorformling
- 13: Abführeinrichtung
- 14: Transportstern
- 16: Zuführeinrichtung
- 20: Lüftungsvorrichtung, Lüftungsgerät
- 22: Sterilisationsvorrichtung
- 24: Heizvorrichtung
- AB: Mittelachse Umformvorrichtung
- AF: Mittelachse AF
- B: Haupttransportrichtung
- N: Nullwinkel
- V: Verbindungsrichtung

## Patentansprüche

1. Anlage (1) zum Herstellen von befüllten Kunststoffbehältnissen (10) aus, insbesondere mittels einer Sterilisationsvorrichtung (22) zur Sterilisation wenigstens einer Innenwandung und/oder Außenwandung der Kunststoffvorformlinge (11), sterilisierten Kunststoffvorformlingen (11), mit einer Transporteinrichtung (2) zum Transportieren der Kunststoffvorformlinge (11) sowie aus den Kunststoffvorformlingen (11) durch Umformung entstandener Kunststoffbehältnisse (10) entlang eines vorgegebenen Transportpfads durch die Anlage (1), mit einer Umformvorrichtung (8) zum Umformen der sterilisierten Kunststoffvorformlinge (11) zu Kunststoffbehältnissen (10), wobei die Transporteinrichtung (2) dazu geeignet und bestimmt ist, die sterilisierten Kunststoffvorformlinge (11) der Umformvorrichtung (8) zuzuführen, wobei die Umformvorrichtung (8) einen um eine Mittelachse (AB) drehbaren Transportträger aufweist, an dem eine Vielzahl von Umformungsstationen zur Umformung jeweils eines Kunststoffvorformlings (11) durch Beaufschlagung mit einem fließfähigen Medium zu einem Kunststoffbehältnis (10) angeordnet ist, mit einer Füllvorrichtung (12) zum Befüllen der Kunststoffbehältnisse (10) während deren wenigstens abschnittsweisen, im Wesentlichen entlang einer Kreislinie erfolgenden Transport um eine Mittelachse (AF) der Füllvorrichtung (12),
wobei
die Umformvorrichtung (8) und die Füllvorrichtung (12) einen maximalen Abstand (d) zueinander in Bezug auf deren jeweilige Mittelachsen (AB, AF)
- von 5,5 m, bevorzugt von 5,3 m, aufweisen und die Umformvorrichtung (8) eine maximale Anzahl von 24 Umformungsstationen aufweist oder
- von 6,0 m, bevorzugt von 5,6 m, aufweisen und die Umformvorrichtung (8) mehr als 24 Umformungsstationen aufweist,
wobei ein Verhältnis zwischen einem Durchmesser des Transportträgers und einer Anzahl der Umformungsstationen kleiner als 0,14 ist.

2. Anlage (1) nach Anspruch 1,
**dadurch gekennzeichnet, dass**
die Anlage (1) eine Sterilisationsvorrichtung (22) zum Sterilisieren wenigstens einer Innenwandung und/oder Außenwandung eines umzuformenden Kunststoffvorformlings (11) aufweist, wobei die Sterilisationsvorrichtung (22) dazu geeignet und bestimmt ist, Mikroorganismen und/oder Sporen auf der Innenwandung und/oder Außenwandung des umzuformenden Kunststoffvorformlings (11) zu inaktivieren.

3. Anlage (1) nach einem der vorangegangenen Ansprüche,
**dadurch gekennzeichnet, dass**
die Umformvorrichtung (8) zum Umformen von Kunststoffvorformlingen (11) zu Kunststoffbehältnissen (10) wenigstens eine Sterilisations-Aufrechterhaltungsvorrichtung aufweist, welche dazu geeignet und bestimmt ist, einen vorgegebenen Sterilisationsgrad und/oder Reinheitsgrad der Innenwandung der umzuformenden und/oder wenigstens teilweise umgeformten Kunststoffvorformlinge (11) aufrecht zu erhalten.

4. Anlage (1) nach einem der vorangegangenen Ansprüche,
**dadurch gekennzeichnet, dass**
die Anlage (1) in einem Sterilisierbetrieb sowie in einem hiervon verschiedenen Produktionsbetrieb betreibbar ist, wobei sich der Sterilisierbetrieb von dem Produktionsbetrieb dadurch unterscheidet, dass in dem Sterilisierbetrieb einer Zuführleitung von zur Umformung vorgesehenem fließfähigen Medium ein Sterilisationsmedium zugeführt wird.

5. Anlage (1) nach dem vorangegangenen Anspruch,
**dadurch gekennzeichnet, dass**
in dem Produktionsbetrieb über die Zuführleitung gefilterte Luft und insbesondere HEPA-gefilterte Luft zum Umformen der Kunststoffvorformlinge zugeführt wird.

6. Anlage (1) nach einem der vorangegangenen Ansprüche,
**dadurch gekennzeichnet, dass**
eine Öffnungs- und/oder Schließbewegung des ersten Formträgers (8a) um einen ersten Winkel erfolgt und eine Öffnungs- und/oder Schließbewegung des zweiten Formträgers (8b) um einen zweiten Winkel, wobei der erste Winkel und der zweite Winkel im Wesentlichen identisch sind.

7. Anlage (1) nach einem der vorangegangenen Ansprüche,
**dadurch gekennzeichnet, dass**
die Anlage (1) einen Reinraum aufweist, welcher von mehreren Wandungen begrenzt wird und innerhalb dessen die Kunststoffvorformlinge (11) zu den Kunststoffbehältnissen (10) expandiert werden und dass die Umformvorrichtung eine Dichtungsvorrichtung aufweist, um den Reinraum gegenüber einer unsterilen Umgebung abzudichten.

8. Anlage (1) nach dem vorangegangenen Anspruch,
**dadurch gekennzeichnet, dass**
die Dichtungseinrichtung ein einfaches Wasserschloss aufweist, welches genau ein Schwert aufweist, welches in einen mit einer Flüssigkeit befüllten, umlaufenden Kanal eintaucht und so einen unsterilen Bereich von dem sterilen Bereich trennt.

9. Anlage (1) nach einem der vorangegangenen Ansprüche,
**dadurch gekennzeichnet, dass**
eine Eckaufstellung der Anlage (1) vorliegt, in welcher eine Behältnishaupttransportrichtung (B) mit einer Verbindungsrichtung (V), welche sich im Wesentlichen von der Mittelachse (AB) der Umformvorrichtung (8) zur Mittelachse (AF) der Füllvorrichtung (12) erstreckt, einen Winkel (α) einschließt, welcher größer ist als 10°, bevorzugt größer als 20° und besonders bevorzugt größer als 28°.

10. Anlage (1) nach einem der vorangegangenen Ansprüche,
**dadurch gekennzeichnet, dass**
die Umformungsstation (4) eine Stationsleistung zwischen 2500 und 2800 Kunststoffbehältnissen (10) pro Stunde aufweist.

11. Anlage (1) nach einem der vorangegangenen Ansprüche,
**dadurch gekennzeichnet, dass**
die Anlage (1) eine Anlagenleistung zwischen 10.000 und 85.000 Kunststoffbehältnissen (10) pro Stunde aufweist.

12. Anlage (1) nach einem der vorangegangenen Ansprüche,
**dadurch gekennzeichnet, dass**
die Transporteinrichtung (2) in einem Abschnitt des Transportpfads zwischen der Umformvorrichtung (8) und der Füllvorrichtung (12) wenigstens drei Transporteinheiten mit einem um eine jeweilige Mittelachse bewegbaren, insbesondere drehbaren, Transportträger, wie Transportsterne (14) und/oder Teilungsverzugssterne (13), aufweist.

13. Anlage (1) nach einem der vorangegangenen Ansprüche,
**dadurch gekennzeichnet, dass**
die Umformvorrichtung (8) und/oder die Füllvorrichtung (12) als Rundläufer ausgebildet ist bzw. sind.

14. Anlage (1) nach einem der vorangegangenen Ansprüche,
**dadurch gekennzeichnet, dass**
die Anlage (1) eine Lüftungsvorrichtung (20) zur Regulierung wenigstens einer vorgegebenen Eigenschaftsgröße einer in dem Bereich der Umformung der Kunststoffvorformlinge (11) zu Kunststoffbehältnissen (10) vorherrschenden Atmosphäre aufweist, wobei die Eigenschaftsgröße charakteristisch ist für eine physikalische Größe, wie ein Luftdruck und/oder eine Lufttemperatur und/oder eine Luftfeuchtigkeit und/oder eine Luftdichte, eine Strömungsgeschwindigkeit, und/oder eine physiko-chemische Größe, wie eine für eine Luftzusammensetzung charakteristische Größe, und/oder für eine Luftreinheitsgröße, wie einen Reinheitsgrad und/oder einen Sterilisationsgrad, und wobei die Lüftungsvorrichtung in Draufsicht auf die Anlage (1) gesehen zwischen der Umformvorrichtung (8) und der Füllvorrichtung (12) angeordnet ist.

15. Verfahren zum Betreiben einer Anlage (1) zum Herstellen von befüllten Kunststoffbehältnissen (10) aus, insbesondere mittels einer Sterilisationsvorrichtung (22) zur Sterilisation wenigstens einer Innenwandung und/oder Außenwandung der Kunststoffvorformlinge (11), sterilisierten Kunststoffvorformlingen (11), mit einer Transporteinrichtung (2), welche die Kunststoffvorformlinge (11) sowie aus den Kunststoffvorformlingen (11) durch Umformung entstandene Kunststoffbehältnisse (10) entlang eines vorgegebenen Transportpfads durch die Anlage (1) transportiert, mit einer Umformvorrichtung (8), welche die sterilisierten Kunststoffvorformlinge (11) zu Kunststoffbehältnissen (10) umformt, wobei die Transporteinrichtung (2) die sterilisierten Kunststoffvorformlinge (11) der Umformvorrichtung (8) zuführt, wobei die Umformvorrichtung (8) einen um eine Mittelachse (AB) drehbaren Transportträger aufweist, an dem eine Vielzahl von Umformungsstationen zur Umformung jeweils eines Kunststoffvorformlings (11) durch Beaufschlagung mit einem fließfähigen Medium zu einem Kunststoffbehältnis (10) angeordnet ist, mit einer Füllvorrichtung (12) zum Befüllen der Kunststoffbehältnisse (10) während deren wenigstens abschnittsweisen, im Wesentlichen entlang einer Kreislinie erfolgenden Transport um eine Mittelachse (AF) der Füllvorrichtung (12),
wobei
die Umformvorrichtung (8) und die Füllvorrichtung (12) einen maximalen Abstand (d) zueinander in Bezug auf deren jeweilige Mittelachsen (AB, AF)
- von 5,5 m, bevorzugt von 5,3 m, aufweisen und die Umformvorrichtung (8) eine maximale Anzahl von 24 Umformungsstationen aufweist oder
- von 6,0 m, bevorzugt von 5,6 m, aufweisen und die Umformvorrichtung (8) mehr als 24 Umformungsstationen aufweist,
wobei ein Verhältnis zwischen einem Durchmesser des Transportträgers und einer Anzahl der Umformungsstationen kleiner als 0,14 ist.

## Claims

1. A system (1) for producing filled plastic containers (10) from sterilized plastic preforms, in particular by a sterilization apparatus (22) for sterilizing at least one inner wall and/or outer wall of the plastic preforms (11), comprising a transport device (2) for transporting the plastic preforms (11) and plastic containers (10) produced from the plastic preforms (11) by forming, along a predetermined transport path through the system (1), comprising a forming apparatus (8) for forming the sterilized plastic preforms (11) into plastic containers (10), wherein the transport device (2) is suitable and intended for supplying the sterilized plastic preforms (11) to the forming apparatus (8), wherein the forming apparatus (8) has a transport carrier which can be rotated about a central axis (AB) on which transport carrier a plurality of forming stations each for forming a plastic preform (11) into a plastic container (10) by applying a flowable medium is arranged, comprising a filling apparatus (12) for filling the plastic containers (10) during their at least sectional transport substantially along a circular line about a central axis (AF) of the filling apparatus (12),
wherein
the forming apparatus (8) and the filling apparatus (12) have a maximum distance (d) from one another in relation to their respective central axes (AB, AF)
- of 5.5 m, preferably of 5.3 m, and the forming apparatus (8) has a maximum number of 24 forming stations or
- of 6.0 m, preferably of 5.6 m, and the forming apparatus (8) has more than 24 forming stations,
wherein a ratio between a diameter of the transport carrier and a number of forming stations is smaller than 0.14.

2. The system (1) according to claim 1,
**characterized in that**
the system (1) has a sterilization apparatus (22) for sterilizing at least one inner wall and/or outer wall of a plastic preform (11) to be formed, wherein the sterilization apparatus (22) is suitable and intended for inactivating microorganisms and/or spores on the inner wall and/or outer wall of the plastic preform (11) to be formed.

3. The system (1) according to at least one of the preceding claims,
**characterized in that**
the forming apparatus (8) for forming plastic preforms (11) into plastic containers (10) has at least one sterilization maintenance apparatus which is suitable and intended for maintaining a predetermined degree of sterilization and/or degree of purity of the inner wall of the plastic preforms to be formed and/or of the at least partially formed plastic preforms (11).

4. The system (1) according to at least one of the preceding claims,
**characterized in that**
the system (1) can be operated in a sterilization operation and in a production operation different therefrom, wherein the sterilization operation differs from the production operation **in that** in the sterilization operation, a sterilizing medium is supplied to a supply line of flowable medium provided for forming.

5. The system (1) according to the preceding claim,
**characterized in that**
in the production operation, filtered air and in particular HEPA-filtered air is supplied via the supply line for forming the plastic preforms.

6. The system (1) according to at least one of the preceding claims,
**characterized in that**
an opening and/or closing movement of a first mold carrier (8a) takes place by a first angle and an opening and/or closing movement of a second mold carrier (8b) takes place by a second angle, wherein the first angle and the second angle are substantially identical.

7. The system (1) according to one of the preceding claims,
**characterized in that**
the system (1) has a clean room which is delimited by several walls and within which the plastic preforms (11) are expanded to form the plastic containers (10), and **in that** the forming apparatus has a sealing apparatus in order to seal the clean room from a non-sterile environment.

8. The system (1) according to the preceding claim,
**characterized in that**
the sealing device has a single water lock, which has exactly one blade, which dips into a circumferential channel filled with a liquid and thus separates a non-sterile region from the sterile region.

9. The system (1) according to at least one of the preceding claims,
**characterized in that**
a corner arrangement of the system (1) is present in which a main container-transport direction (B) encloses an angle (α) greater than 10°, preferably greater than 20° and particularly preferably greater than 28°, with a connection direction (V) which extends substantially from the central axis (AB) of the forming apparatus (8) to the central axis (AF) of the filling apparatus (12).

10. The system (1) according to at least one of the preceding claims,
**characterized in that**
the forming station (4) has a station capacity of between 2500 and 2800 plastic containers (10) per hour.

11. The system (1) according to at least one of the preceding claims,
**characterized in that**
the system (1) has a system capacity of between 10,000 and 85,000 plastic containers (10) per hour.

12. The system (1) according to at least one of the preceding claims,
**characterized in that**
in a section of the transport path between the forming apparatus (8) and the filling apparatus (12), the transport device (2) has at least three transport units with a, in particular rotatable, transport carrier, such as transport starwheels (14) and/or pitch delay starwheels (13), which can be moved about respective central axes.

13. The system (1) according to at least one of the preceding claims,
**characterized in that**
the forming apparatus (8) and/or the filling apparatus (12) is/are designed as a carousel-type machine.

14. The system (1) according to at least one of the preceding claims,
**characterized in that**
the system (1) has a ventilation apparatus (20) for regulating at least one predetermined property variable of an atmosphere prevailing in the region of the forming of the plastic preforms (11) into plastic containers (10), wherein the property variable is characteristic of a physical variable, such as an air pressure and/or an air temperature and/or an air humidity and/or an air density, a flow rate, and/or a physicochemical variable, such as a variable characteristic of an air composition, and/or of an air purity variable, such as a degree of purity and/or a degree of sterilization, and wherein, in a plan view of the system (1), the ventilation apparatus is arranged between the forming apparatus (8) and the filling apparatus (12).

15. A method for operating a system (1) for producing filled plastic containers (10) from sterilized plastic preforms, in particular by a sterilization apparatus (22) for sterilizing at least one inner wall and/or outer wall of the plastic preforms (11), comprising a transport device (2), which transports the plastic preforms (11) and plastic containers (10) produced from the plastic preforms (11) by forming, along a predetermined transport path through the system (1), comprising a forming apparatus (8), which forms the sterilized plastic preforms (11) into plastic containers (10), wherein the transport device (2) supplies the sterilized plastic preforms (11) to the forming apparatus (8), wherein the forming apparatus (8) has a transport carrier which can be rotated about a central axis (AB) on which transport carrier a plurality of forming stations each for forming a plastic preform (11) into a plastic container (10) by applying a flowable medium is arranged, comprising a filling apparatus (12) for filling the plastic containers (10) during their at least sectional transport substantially along a circular line about a central axis (AF) of the filling apparatus (12),
wherein
the forming apparatus (8) and the filling apparatus (12) have a maximum distance (d) from one another in relation to their respective central axes (AB, AF)
- of 5.5 m, preferably of 5.3 m, and the forming apparatus (8) has a maximum number of 24 forming stations or
- of 6.0 m, preferably 5.6 m, and the forming apparatus (8) has more than 24 forming stations,
wherein a ratio between a diameter of the transport carrier and a number of forming stations is smaller than 0.14.

## Revendications

1. Installation (1) pour la fabrication de récipients en plastique (10) remplis à partir de préformes en plastique (11) stérilisées, en particulier au moyen d'un dispositif de stérilisation (22) pour la stérilisation d'au moins une paroi intérieure et/ou paroi extérieure des préformes en plastique (11), avec un équipement de transport (2) pour le transport des préformes en plastique (11) ainsi que des récipients en plastique (10) obtenus à partir des préformes en plastique (11) par formage le long d'un trajet de transport prédéfini à travers l'installation (1), avec un dispositif de formage (8) pour former les préformes en plastique (11) stérilisées en récipients en plastique (10), dans laquelle l'équipement de transport (2) est adapté pour et destiné à amener les préformes en plastique (11) stérilisées au dispositif de formage (8), dans laquelle le dispositif de formage (8) présente un support de transport pouvant tourner autour d'un axe central (AB), sur lequel sont disposées une pluralité de stations de formage pour former respectivement une préforme en plastique (11) en un récipient en plastique (10) par sollicitation avec un milieu fluide, avec un dispositif de remplissage (12) pour remplir les récipients en plastique (10) pendant leur transport s'effectuant au moins sur certaines sections, sensiblement le long d'une ligne circulaire autour d'un axe central (AF) du dispositif de remplissage (12),
dans laquelle
le dispositif de formage (8) et le dispositif de remplissage (12) présentent une distance maximale (d) l'un par rapport à l'autre vis-à-vis de leurs axes centraux (AB, AF) respectifs
- de 5,5 m, de préférence de 5,3 m, et le dispositif de formage (8) présente un nombre maximal de 24 stations de formage ou
- de 6,0 m, de préférence de 5,6 m, et le dispositif de formage (8) présente plus de 24 stations de formage,
dans laquelle un rapport entre un diamètre du support de transport et un nombre de stations de formage est inférieur à 0,14.

2. Installation (1) selon la revendication 1,
**caractérisée en ce que**
l'installation (1) présente un dispositif de stérilisation (22) pour stériliser au moins une paroi intérieure et/ou paroi extérieure d'une préforme en plastique (11) à former, dans laquelle le dispositif de stérilisation (22) est adapté pour et destiné à inactiver des micro-organismes et/ou spores sur la paroi intérieure et/ou paroi extérieure de la préforme en plastique (11) à former.

3. Installation (1) selon l'une quelconque des revendications précédentes,
**caractérisée en ce que**
le dispositif de formage (8) pour le formage de préformes en plastique (11) en récipients en plastique (10) présente au moins un dispositif de maintien de stérilisation, qui est adapté pour et destiné à maintenir un degré de stérilisation et/ou degré de pureté prédéfini de la paroi intérieure des préformes en plastique (11) à former et/ou au moins partiellement formées.

4. Installation (1) selon l'une quelconque des revendications précédentes,
**caractérisée en ce que**
l'installation (1) peut être exploitée dans un mode de stérilisation ainsi que dans un mode de production différent de celui-ci, dans laquelle le mode de stérilisation se distingue du mode de production **en ce que** dans le mode de stérilisation un milieu de stérilisation est amené à une conduite d'alimentation en milieu fluide prévu pour le formage.

5. Installation (1) selon la revendication précédente,
**caractérisée en ce que**
dans le mode production de l'air filtré et en particulier de l'air filtré HEPA est amené par la conduite d'alimentation pour le formage des préformes en plastique.

6. Installation (1) selon l'une quelconque des revendications précédentes,
**caractérisée en ce que**
un mouvement d'ouverture et/ou de fermeture du premier support de moule (8a) s'effectue selon un premier angle et un mouvement d'ouverture et/ou de fermeture du second support de moule (8b) s'effectue selon un second angle, dans laquelle le premier angle et le second angle sont sensiblement identiques.

7. Installation (1) selon l'une quelconque des revendications précédentes,
**caractérisée en ce que**
l'installation (1) présente une salle blanche, qui est délimitée par plusieurs parois et à l'intérieur de laquelle les préformes en plastique (11) sont expansées en les récipients en plastique (10) et que le dispositif de formage présente un dispositif d'étanchéité pour étanchéifier la salle blanche par rapport à un environnement non stérile.

8. Installation (1) selon la revendication précédente,
**caractérisée en ce que**
l'équipement d'étanchéité présente un simple scellé sous eau qui présente exactement une lame qui plonge dans un canal circulaire rempli d'un liquide et sépare ainsi une zone non stérile de la zone stérile.

9. Installation (1) selon l'une quelconque des revendications précédentes,
**caractérisée en ce que**
une disposition angulaire de l'installation (1) est présente, dans laquelle une direction de transport principale de récipients (B) forme avec une direction de liaison (V), qui s'étend sensiblement de l'axe central (AB) du dispositif de formage (8) à l'axe central (AF) du dispositif de remplissage (12), un angle (α) qui est supérieur à 10°, de préférence supérieur à 20° et de manière particulièrement préférée supérieur à 28°.

10. Installation (1) selon l'une quelconque des revendications précédentes,
**caractérisée en ce que**
la station de formage (4) présente une capacité de station comprise entre 2500 et 2800 récipients en plastique (10) par heure.

11. Installation (1) selon l'une quelconque des revendications précédentes,
**caractérisée en ce que**
l'installation (1) présente une capacité d'installation comprise entre 10 000 et 85 000 récipients en plastique (10) par heure.

12. Installation (1) selon l'une quelconque des revendications précédentes,
**caractérisée en ce que**
l'équipement de transport (2) présente dans une section du trajet de transport entre le dispositif de formage (8) et le dispositif de remplissage (12) au moins trois unités de transport avec un support de transport mobile, en particulier rotatif, autour d'un axe central respectif, tel que des systèmes de transport en étoile (14) et/ou des systèmes de réglage de pas en étoile (13).

13. Installation (1) selon l'une quelconque des revendications précédentes,
**caractérisée en ce que**
le dispositif de formage (8) et/ou le dispositif de remplissage (12) est ou sont réalisés comme des plateaux tournants.

14. Installation (1) selon l'une quelconque des revendications précédentes,
**caractérisée en ce que**
l'installation (1) présente un dispositif de ventilation (20) pour réguler au moins une grandeur de propriété prédéfinie d'une atmosphère prédominante dans la zone de la formation des préformes en plastique (11) en récipients en plastique (10), dans laquelle la grandeur de propriété est caractéristique d'une grandeur physique, telle qu'une pression de l'air et/ou une température de l'air et/ou une humidité de l'air et/ou une densité de l'air, une vitesse d'écoulement, et/ou une grandeur physico-chimique, telle qu'une grandeur caractéristique d'une composition de l'air, et/ou une grandeur de pureté de l'air, telle qu'un degré de pureté et/ou un degré de stérilisation, et dans laquelle le dispositif de ventilation est disposé en vue de dessus de l'installation (1) entre le dispositif de formage (8) et le dispositif de remplissage (12).

15. Procédé d'exploitation d'une installation (1) pour la fabrication de récipients en plastique (10) remplis à partir de préformes en plastique (11) stérilisées, en particulier au moyen d'un dispositif de stérilisation (22) pour la stérilisation d'au moins une paroi intérieure et/ou paroi extérieure des préformes en plastique (11), avec un équipement de transport (2), qui transporte les préformes en plastique (11) ainsi que les récipients en plastique (10) obtenus à partir des préformes en plastique (11) par formage le long d'un trajet de transport prédéfini à travers l'installation (1), avec un dispositif de formage (8), qui forme les préformes en plastique (11) stérilisées en récipients en plastique (10), dans lequel l'équipement de transport (2) amène les préformes en plastique (11) stérilisées au dispositif de formage (8), dans lequel le dispositif de formage (8) présente un support de transport pouvant tourner autour d'un axe central (AB), sur lequel sont disposées une pluralité de stations de formage pour former respectivement une préforme en plastique (11) par sollicitation avec un milieu fluide en un récipient en plastique (10), avec un dispositif de remplissage (12) pour remplir les récipients en plastique (10) pendant leur transport s'effectuant au moins par sections, sensiblement le long d'une ligne circulaire autour d'un axe central (AF) du dispositif de remplissage (12),
dans lequel
le dispositif de formage (8) et le dispositif de remplissage (12) présentent une distance maximale (d) l'un par rapport à l'autre vis-à-vis de leurs axes centraux (AB, AF) respectifs
- de 5,5 m, de préférence de 5,3 m, et le dispositif de formage (8) présente un nombre maximal de 24 stations de formage ou
- de 6,0 m, de préférence de 5,6 m, et le dispositif de formage (8) présente plus de 24 stations de formage,
dans lequel un rapport entre un diamètre du support de transport et un nombre de stations de formage est inférieur à 0,14.
